# EUROPEAN PATENT APPLICATION

(11) **EP 4 826 411 A1**
(43) Date of publication of application: **21.10.2026**
(21) Application number: 26172338.1
(22) Date of filing: 14.04.2026
(51) Int. Cl.: G01S 13/00, G01S 7/00, G01S 13/58, G01S 13/87, G01S 13/931, G01S 7/35, G01S 13/34

(54) **RADAR SYSTEM AND METHOD OF RADAR IMAGING**

(30) Priority: 17.04.2025 IT 202500008730; 25.08.2025 FR 2509679
(71) Applicant: STMicroelectronics International N.V., 1228 Plan-les-Ouates, Geneva (CH)
(72) Inventor: AL-KADI, Ghiath, 8045 GRAZ (AT); AHMED, Faisal, 4209 ENGERWITZDORF (AT); WUTTE, Rene, 8151 SANKT BARTHOLOMÄ (AT); SALLE, Didier, 31100 TOULOUSE (FR); VICARI, Paolo, 25017 LONATO DEL GARDA (IT); DI PASCALE, Gaetano, 20147 MILANO (IT)
(74) Representative: Cabinet Beaumont

(57) **Abstract**

The present disclosure relates to a radar system comprising:
- a first circuit comprising n outputs providing n first radio frequency, RF, transmission signals for driving a plurality of n transmit antennas and m inputs for receiving m RF input signals received by a plurality of m receive antennas; and
- a second circuit comprising j outputs providing j second RF transmission signals for driving a plurality of j transmit antennas, the first and second circuits receiving one or more common timing signals for synchronizing the first and second RF transmission signals;
wherein the first circuit is configured to process the m RF input signals received from the m receive antennas, and to perform, for example, virtual channel processing on only (n+j).m virtual channels.

## Description

### Technical field

The present disclosure relates generally to the field of radar systems and methods of radar imaging.

### Background art

Currently available RADAR-on-chip (RoC) devices support a fixed number of multiple-input, multiple-output (MIMO) virtual channels, defined as the product of the number of physical transmitter (TX) channels and the number of receiver (RX) channels integrated on each device. Since different RADAR applications may have different optimal MIMO virtual channel configurations, it would be useful to be able to scale the MIMO capabilities of a RADAR system without having to design and implement a different optimized RoC device for each desired system configuration. However, due to the way current RoC devices extract MIMO information by processing data from the integrated RX channels, it is not practical to extend the number of supported MIMO virtual channels by simply pairing one such RoC with additional devices having TX and RX capabilities.

### Summary of Invention

Embodiments of the invention are defined by the appended set of claims.

According to one aspect, there is provided a radar system comprising:
- a first circuit comprising n outputs providing n first radio frequency (RF) transmission signals for driving a plurality of n transmit antennas and m inputs for receiving m RF input signals received by a plurality of m receive antennas; and
- a second circuit comprising j outputs providing j second RF transmission signals for driving a plurality of j transmit antennas, the first and second circuits receiving one or more common timing signals for synchronizing the first and second RF transmission signals;
wherein the first circuit is configured to process the m RF input signals received from the m receive antennas, and to perform, for example, virtual channel processing on only (n+j).m virtual channels.

According to one embodiment, the first circuit comprises a first memory configured to store a first data cube based on the m RF input signals from the m receive antennas, wherein a total memory storage capacity of the first memory is lower than a storage capacity needed to store a data cube based on more than m RF input signals.

According to one embodiment:
- the first or second circuit comprises a local oscillator (LO) configured to generate a frequency-modulated continuous wave (FMCW) signal comprising a set of chirp modulations for a first frame generated in a first radar cycle; and
- each of the n and j transmission signals forms an RF transmission channel comprising a phase-modulated version of the FMCW signal.

According to one embodiment, each of the m RF input signals forms an RF reception channel and the first circuit is configured to perform analog and digital signal processing of the m RF reception channels comprising:
- mixing each of the m RF input signals with the FMCW signal to obtain an intermediate frequency (IF) signal having a phase that is dependent on the antenna locations of the m receive antennas and the n+j transmit antennas;
- sampling, by one or more analog to digital converters (ADC) of the first circuit, the IF signal of each RF reception channel to generate a set of ADC samples for each chirp of the first frame; and
- performing a fast Fourier transform (FFT) operation on the ADC samples to produce complex range FFT data for each chirp and for each of the m RF reception channels, wherein the first data cube stored by the first memory comprises the complex range FFT data for all chirps of the first frame and for each of the m RF reception channels.

According to one embodiment, the second circuit is a transmission channel extender chip that is not capable of performing digital signal processing of RF reception channels.

According to one embodiment, the second circuit comprises a plurality of transmission channel extender chips, each comprising one or more of the j outputs coupled to one or more of the j transmit antennas, each of the transmission channel extender chips receiving the one or more common timing signals.

According to one embodiment, the second circuit further comprises k inputs for receiving k RF input signals received by a plurality of k receive antennas, and wherein the first circuit is not configured to receive the k RF input signals and is not configured to perform digital signal processing based on the k RF input signals.

According to one embodiment, a total memory storage capacity of the first circuit is lower than a storage capacity needed to store both the first data cube and a second data cube based on the k RF input signals from the k receive antennas.

According to one embodiment, the first and second circuits are each a radar-on-chip (RoC) comprising data storage and processing capabilities.

According to one embodiment, the first circuit is a radar-on-chip (RoC), and the second circuit comprises a plurality of radar-on-chips (RoC) each comprising one or more of the j outputs coupled to one or more of the j transmit antennas, each radar-on-chip of the second circuit receiving the one or more common timing signals and comprising data storage and processing capabilities.

According to one embodiment, the second circuit comprises a second memory configured to store a second data cube based on the k RF input signals from the k receive antennas, wherein a total memory storage capacity of the second memory is lower than a storage capacity needed to store a data cube based on more than k RF input signals, and wherein a total memory storage capacity of the second circuit is lower than a storage capacity needed to store both the first and second data cubes.

According to one embodiment, the local oscillator (LO) is configured to generate an FMCW signal comprising a set of chirp modulations for a second frame generated in a second radar cycle and wherein each of the k RF input signals forms an RF reception channel and the second circuit is configured to perform analog and digital signal processing of the k RF reception channels comprising:
- mixing each of the k RF input signals with the FMCW signal of the first or second frame to obtain an intermediate frequency (IF) signal having a phase that is dependent on the antenna locations of the k receive antennas and the n+j transmit antennas;
- sampling, by one or more analog to digital converters (ADC) of the second circuit, the IF signal of each RF reception channel to generate a set of ADC samples for each chirp of the first or second frame; and
- performing an FFT operation on the ADC samples to produce complex range FFT data for each chirp and for each of the k RF reception channels, wherein the second data cube stored by the second memory comprises the complex range FFT data for all chirps of the first or second frame and for each of the k RF reception channels.

According to a further aspect, there is provided a method of radar imaging by a radar system, the method comprising:
- receiving, by first and second circuits of the radar system, one or more common timing signals for synchronizing n first and j second RF transmission signals;
- outputting, at n outputs of the first circuit, the n first RF transmission signals for driving a plurality of n transmit antennas;
- receiving, by m inputs of the first circuit, m RF input signals received by a plurality of m receive antennas;
- outputting, at j outputs of the second circuit, the j second RF transmission signals for driving a plurality of j transmit antennas;
- processing, by the first circuit, the m RF input signals received from the m receive antennas; and
- performing, for example, virtual channel processing by the first circuit on only (n+j).m virtual channels.

According to one embodiment, the method further comprises storing in a first memory of the first circuit a first data cube based on the m RF input signals from the m receive antennas, wherein a total memory storage capacity of the first memory is lower than a storage capacity needed to store a data cube based on more than m RF input signals.

According to one embodiment, the method further comprises generating, by a local oscillator (LO) of the first or second circuit, a frequency-modulated continuous wave (FMCW) signal comprising a set of chirp modulations for a first frame generated in a first radar cycle, wherein each of the n first and j second transmission signals forms an RF transmission channel comprising a phase-modulated version of the FMCW signal.

According to one embodiment, each of the m RF input signals forms an RF reception channel, the method further comprising performing by the first circuit analog and digital signal processing of the m RF reception channels comprising:
- mixing each of the m RF input signals with the FMCW signal to obtain an intermediate frequency (IF) signal having a phase that is dependent on the antenna locations of the m receive antennas and the n+j transmit antennas;
- sampling, by one or more analog to digital converters (ADC) of the first circuit, the IF signal of each RF reception channel to generate a set of ADC samples for each chirp of the first frame; and
- performing a fast Fourier transform (FFT) operation on the ADC samples to produce complex range FFT data for each chirp and for each of the m RF reception channels, wherein the first data cube stored by the first memory comprises the complex range FFT data for all chirps of the first frame and for each of the m RF reception channels.

According to one embodiment, the second circuit further comprises k inputs for receiving k RF input signals received by a plurality of k receive antennas, and wherein the first circuit is not configured to receive the k RF input signals and is not configured to perform analog or digital signal processing based on the k RF input signals, the method further comprising:
- storing, by a second memory of the second circuit, a second data cube based on the k RF input signals from the k receive antennas, wherein a total memory storage capacity of the second memory is lower than a storage capacity needed to store a data cube based on more than k RF input signals.

According to one embodiment, each of the k RF input signals forms an RF reception channel and the method further comprises generating, by the local oscillator (LO), an FMCW signal comprising a set of chirp modulations for a second frame generated in a second radar cycle and performing, by the second circuit, analog and digital signal processing of the k RF reception channels comprising:
- mixing each of the k RF input signals with the FMCW signal of the first or second frame to obtain an intermediate frequency (IF) signal having a phase that is dependent on the antenna locations of the k receive antennas and the n+j transmit antennas;
- sampling, by one or more analog to digital converters (ADC) of the second circuit, the IF signal of each RF reception channel to generate a set of ADC samples for each chirp of the first or second frame; and
- performing an FFT operation on the ADC samples to produce complex range FFT data for each chirp and for each of the k RF reception channels, wherein the second data cube stored by the second memory comprises the complex range FFT data for all chirps of the first or second frame and for each of the k RF reception channels.

According to one embodiment, the second circuit is a transmission channel extender chip that is not capable of performing digital signal processing of RF reception channels.

According to one embodiment, the second circuit comprises a plurality of transmission channel extender chips, each comprising one or more of the j outputs coupled to one or more of the j transmit antennas, each of the transmission channel extender chips receiving the one or more common timing signals.

According to one embodiment, the first and second circuits are each a radar-on-chip (RoC) comprising data storage and processing capabilities.

According to one embodiment, the first circuit is a radar-on-chip (RoC), and the second circuit comprises a plurality of radar-on-chips (RoC) each comprising one or more of the j outputs coupled to one or more of the j transmit antennas, each radar-on-chip of the second circuit receiving the one or more common timing signals and comprising data storage and processing capabilities.

### Brief description of drawings

The foregoing features and advantages, as well as others, will be described in detail in the following description of specific embodiments given by way of illustration and not limitation with reference to the accompanying drawings, in which:
Figure 1 illustrates, schematically, the steps of a radar signal processing method according to one embodiment of the present disclosure;
Figure 2 is an example of a timeline chart illustrating a state-of-the-art radar imaging method;
Figure 3 illustrates a radar system according to one embodiment of the present disclosure;
Figure 4 is a timeline chart illustrating a radar imaging method of the radar system of Figure 3, according to one embodiment of the present disclosure;
Figure 5 illustrates a radar system according to another embodiment of the present disclosure;
Figure 6 is a timeline chart illustrating a radar imaging method of the radar system of Figure 5, according to one embodiment of the present disclosure;
Figure 7 is a timeline chart illustrating a radar imaging method of the radar system of Figure 5, according to another embodiment of the present disclosure; and
Figure 8 is a timeline chart illustrating a radar imaging method of the radar system of Figure 5, according to another embodiment of the present disclosure.

### Invention overview

Like features have been designated by like references in the various figures. In particular, the structural and/or functional features that are common among the various embodiments may have the same references and may dispose identical structural, dimensional and material properties.

For the sake of clarity, only the operations and elements that are useful for an understanding of the embodiments described herein have been illustrated and described in detail.

In the present description, a transceiver corresponds to a device with transmitting and receiving capabilities.

In the present description, a RADAR-on-Chip (RoC) corresponds to a device with transmitting, receiving, data storage and processing capabilities.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures.

Unless specified otherwise, the expressions "around", "approximately", "substantially" and "in the order of" signify within 10 %, and preferably within 5 %.

A RADAR system generally has analog signal processing capabilities, as required to generate, transmit, receive and convert to a digital format a set of RF signals.

A RADAR system generally has digital signal processing (DSP) capabilities for physical RX channels, as required to transform a set of RF signals converted in digital format by means of a first set of algorithms.

A RADAR system generally has digital signal processing (DSP) capabilities for virtual channels, as required to further transform the outputs of physical RX channels processing by means of a second set of algorithms to extract MIMO virtual channel information from the same outputs.

A RADAR analog signal processing for example comprises one or more of the following steps:
- a local oscillator generates a frequency-modulated continuous wave signal, with application-specific chirp modulations;
- a set of similar FMCW chirps (frame) is generated for each RADAR cycle, for a total duration (radio-frequency (RF) measurement time) which is a fraction of the total RADAR cycle;
- each TX channel outputs a phase-modulated version of the LO signal, with TX-specific phase modulations, to enable later TX demodulation upon reception;
- each RX channel mixes the received RF signal with the LO signal to obtain an intermediate-frequency (IF) signal, which has a phase dependent on RX and TX antenna locations; and
- the IF signal of each RX channel is sampled by an analog-to-digital converter (ADC) to generate a set of real or complex ADC samples for each chirp of a frame.

A digital signal processing (DSP) for physical RX channels for example comprises one or more of the following steps:
- the ADC samples of each chirp and RX are processed with a fast-Fourier transform (FFT) operation and/or other algorithms to produce complex range FFT data for each chirp and each RX;
- each element in the range FFT data of a chirp carries information about the presence of targets at a specific distance from the RADAR (range); and
- the range FFT data for all chirps of a frame and for all RX is stored, possibly in compressed form, into a memory (data cube).

The complexity of physical channel processing algorithms scales with the number of physical RX and is generally high, but it can be supported by area-efficient dedicated hardware (HW) processing resources (e.g. FFT accelerators).

The memory requirements of physical channel processing algorithms are comparatively low, because each chirp can be processed independently, so that it is not necessary to store multiple RX data from chirps to complete the processing.

Since there are no dependencies between data from different chirps, a part of the above processing steps may be executed on a per-chirp basis (e.g. during RF measurement time).

A digital signal processing (DSP) for virtual channels for example comprises one or more of the following steps:
- range FFT elements corresponding to the same range are extracted from the data cube memory, for all chirps of a frame and for all RX;
- each extracted set of range FFT data elements is processed with further FFT and/or other algorithms to separate the information corresponding to different target radial velocities and to demodulate the TX, in order to obtain complex data for a set of N_{TX}N_{RX} virtual RX (MIMO demodulation) ; and
- the virtual RX complex data is processed with direction-of-arrival (DOA), detection and/or other algorithms to obtain a 4D point cloud, representing the presence, distance, angular direction and radial velocity of each detected target.

N_{TX}N_{RX} for example corresponds to a number N of TX and of RX.

The complexity of virtual channel processing algorithms scales with the number of virtual channels and is generally high, but it can be supported by area-efficient dedicated HW processing resources (e.g. FFT accelerators).

The high input and output data rates of virtual channel processing algorithms require high throughput data transfers, which makes on-chip processing very advantageous, where applicable.

The memory requirements of virtual channel processing algorithms scale with the number of physical RX and are generally high (full frame storage).

Since there are algorithmic dependencies between data from different chirps, the above processing steps can only be executed after a complete frame has been captured and stored (e.g. after the RF measurement time).

A high level object processing for example comprises one or more of the following steps:
- a 4D point cloud representing the presence, distance, angular direction and radial velocity of each detected target is processed with clustering, tracking, classification and/or other algorithms to obtain an object list;
- the object list allows to localize in 3D space, track in time and classify each detected static and/or moving object;
- in some applications, object processing algorithms are implemented on an external processing entity (e.g. a central processing unit combining multiple RADAR views from different sensors), in which case each RADAR sensor directly outputs the unprocessed 4D point cloud.

The complexity of object processing algorithms does not scale in an obvious way with the number of RADAR physical or virtual channels and is comparatively low, so it can be supported by general-purpose processing resources (e.g. a CPU) .

The low input data rates of object processing algorithms do not require high throughput data transfers, which makes off-chip processing of the 4D point cloud a viable and efficient option, where applicable.

The memory requirements of object processing algorithms are comparatively low, because they rely on 4D point cloud storage (sparse data representation).

Since there is an algorithmic dependency on 4D point cloud data, the above processing steps can only be executed after a frame has been, completely or at least partially, processed by the virtual channel DSP algorithms.

Currently, cascading is used to scale frequency-modulated continuous wave (FMCW) multiple-input multiple-output (MIMO) RADARs in terms of increasing the number of transmitter channels and/or receiver channels where several transceiver chips are acting like a single-chip sensor. A primary device provides the local oscillator (LO) output, clock output and frame synchronization signals to the other secondary devices which can either be one or several. This allows the system to generate and receive coherent FMCW chirps across all primary and secondary devices thereby obtaining a combined array of transmitters and receivers, enabling beam forming and MIMO operation across the array of devices.

However, in state-of-the-art solutions, such scalability is considered attractive mostly for high resolution imaging RADAR systems based on monolithic microwave integrated circuits (MMICs), which have transceiver capabilities but are not storing or fully processing the acquired data and simply stream out the RX data, in either unprocessed or pre-processed form, to a central processing unit, which stores the streamed RX data coming from the transceiver devices and performs the actual MIMO virtual channel processing on the RX data.

In state-of-the art RoC devices, the number of TX and/or RX and the corresponding storage capability are optimized for a fixed number of MIMO virtual channels, defined as the product of physical TX and RX channels. The number of TX and RX channels is limited by device area and power dissipation constraints, usually with a more direct impact of TX on device power (due to the current consumption of RF amplifiers) and of RX on device area (due to the data storage needs of virtual channel processing algorithms). Since different RADAR applications, or just different variants or levels of the same application, require different MIMO virtual channels configurations, dedicated RoC devices, with differently optimized TX and/or RX configurations, must be used in state-of-the art RADAR systems.

State-of-the art RoC are not optimized for scalability. Extending the MIMO virtual channels of a base RoC would generally require adding coherent TX and/or RX physical channels to the existing ones. This could in principle be achieved by cascading a secondary RF chip to the base RoC through an LO distribution network to enable coherent operation. However, cascading a RoC with a TX/RX transceiver chip would require a fast chip-to-chip data interface to transfer the additional RX data and an increase of RoC memory and processing resources to handle the additional virtual channels. Cascading a RoC with another RoC would also require a fast chip-to-chip data interface to exchange the additional RX data and an increase of RoC memory and processing resources, regardless of whether virtual channel processing is executed on a single device or shared in some way between the two devices.

Distributed Aperture Radar (DAR) requires sophisticated synchronization techniques both on hardware and algorithm side which is both complex and costly.

### Description of detailed embodiments

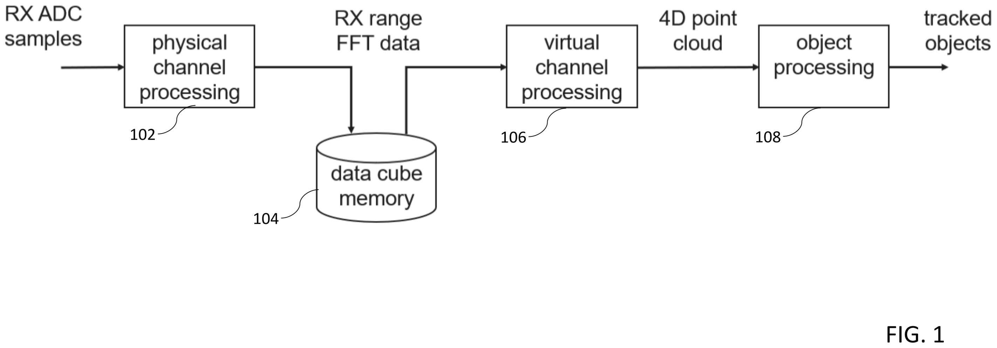

Figure 1 illustrates, schematically, the steps of a radar signal processing method according to an embodiment of the present disclosure.

According to one embodiment, a radar system comprises outputs providing RF transmission signals for driving a plurality of transmit antennas and further comprises inputs for receiving RF input signals received by a plurality of receive antennas. The radar system is for example configured to emit frames, each frame for example consisting in a chirped analogue signal comprising one or more chirps. The radar system is for example further configured to receive frames, each frame for example consisting in a chirped analogue signal comprising one or more chirps.

Each of the RF input signals for example forms an RF reception channel and the radar system is for example configured to perform analogue and digital signal processing of the RF reception channels by processing of the physical RX channels.

Analog signal processing of a physical RX channel for example comprises mixing the RF input signal with another signal to obtain an intermediate frequency (IF) signal having a phase that is dependent on the antenna location of the receive antenna and on the antenna locations of the transmit antennas. The IF signal of the RX channel is for example sampled by an analog-to-digital converter (ADC) to generate a set of real or complex ADC samples ("RX ADC samples") for each chirp of a frame.

In a step 102 ("physical channel processing"), the radar system is configured to process the RF input signals, for example in the form of the set of real or complex ADC samples.

The samples of each chirp and each RX channel are processed, for example using a fast Fourier transform (FFT) operation and/or other algorithms, to produce complex range FFT data for each chirp and each RX channel ("RX range FFT data"). For example, each element in the range FFT data of a chirp carries information about the presence of targets at a specific distance from the radar.

The complexity of physical channel processing algorithms scales with the number of physical RX channels and is generally relatively high. The complexity is for example supported by area-efficient dedicated hardware processing resources, for example by FFT accelerators.

The high input and output data rates of physical channel processing algorithms for example require high throughput data transfers, which makes on-chip processing advantageous. The memory requirements of physical channel processing algorithms are for example comparatively low, because each chirp can be processed independently.

There are no algorithmic dependencies between data from different chirps of a signal emitted by a TX channel. Therefore, the step 102 is for example executed on a per-chirp basis, for example while the RX channels are receiving the subsequent chirps.

In a step 104, after step 102, the range FFT data is stored in a memory ("data cube memory") of the radar. For example, the range FFT data for each chirp of a frame and for each RX channel is stored, for example in a compressed form, in the memory. The amount of data to be stored and analysed scales with the number of physical RX channels.

In a step 106 ("virtual channel processing"), after step 104, the range FFT data is processed.

According to one embodiment, range FFT elements corresponding to the same range, that is to say to a similar target distance from the radar, are extracted from the memory, for all chirps of a frame and for all RX. Each extracted set of range FFT data elements is for example processed to perform MIMO demodulation. MIMO demodulation for example corresponds to the extraction of a set of virtual RX channels from a corresponding set of combinations of physical TX and RX channels, wherein the number of extracted virtual RX channels can be for example larger than the number of physical RX channels. Complex data is for example obtained for a set of N_{TX} multiplied by N_{RX} virtual antennas where N_{TX} corresponds to the number of TX physical channels and N_{RX} corresponds to the number of RX physical channels. The obtained complex virtual channel data is then for example further manipulated using digital signal processing (DSP), for example using FFT operations and/or other algorithms, to separate the information corresponding to different target radial velocities and/or spatial directions. The virtual RX complex data is for example processed with direction-of-arrival (DOA), detection and/or other algorithms, for example to obtain a point cloud. The point cloud is for example a 4D point cloud and for example represents the distance, azimuth and elevation angular directions and radial velocity of each detected target.

The complexity of virtual channel processing algorithms scales with the number of virtual channels. The complexity of virtual channel processing algorithms is relatively high. It is for example supported by area-efficient dedicated HW processing resources, for example FFT accelerators.

The high input and output data rates of virtual channel processing algorithms require high throughput data transfers, which makes on-chip processing very advantageous.

The memory requirements of virtual channel processing algorithms scale, at least, as the number of physical RX and are relatively high, for example to support a full frame storage.

There are algorithmic dependencies between data from different chirps of a frame. Therefore, the step 106 is for example executed after a complete frame has been captured and stored by the RX channels.

In a step 108 ("object processing"), after step 106, the point cloud is for example processed with algorithms, for example clustering, tracking, classification, etc., for example to obtain an object list. The object list for example allows to localize in 3D space, track in time, classify, etc. each detected static and/or moving object.

In alternative embodiments, object processing algorithms are implemented on an external processing entity, for example a central processing unit combining multiple radar views from different sensors. Each radar sensor for example directly outputs the unprocessed point cloud, and the step 108 is omitted in such a case.

The complexity of object processing algorithms may not scale in an obvious way against the number of radar physical or virtual channels and is for example comparatively low. Therefore, object processing is for example supported by general-purpose processing resources, for example by a CPU. For example, the low input data rates of object processing algorithms do not require high throughput data transfers, which makes off-chip processing of the 4D point cloud a viable and efficient option.

The memory requirements of object processing algorithms are for example comparatively low, for example because they rely on a sparse data representation, for example a 4D point cloud storage.

There is an algorithmic dependency on the point cloud data. Therefore, the step 108 is for example executed after a frame has been completely, or at least partially, processed in step 106.

The steps 102 and 104 of data processing and data storage are performed at a relatively high rate, for example higher or equal to the frame rate of the radar system, for example corresponding to the chirp rate of the signal.

Increasing the number of RX channels of a radar system increases the complexity of the physical channel processing, of the required storage capacity of the memory and of the complexity of the virtual channel processing.

Increasing the number of TX channels of a radar system further increases the complexity of the virtual channel processing.

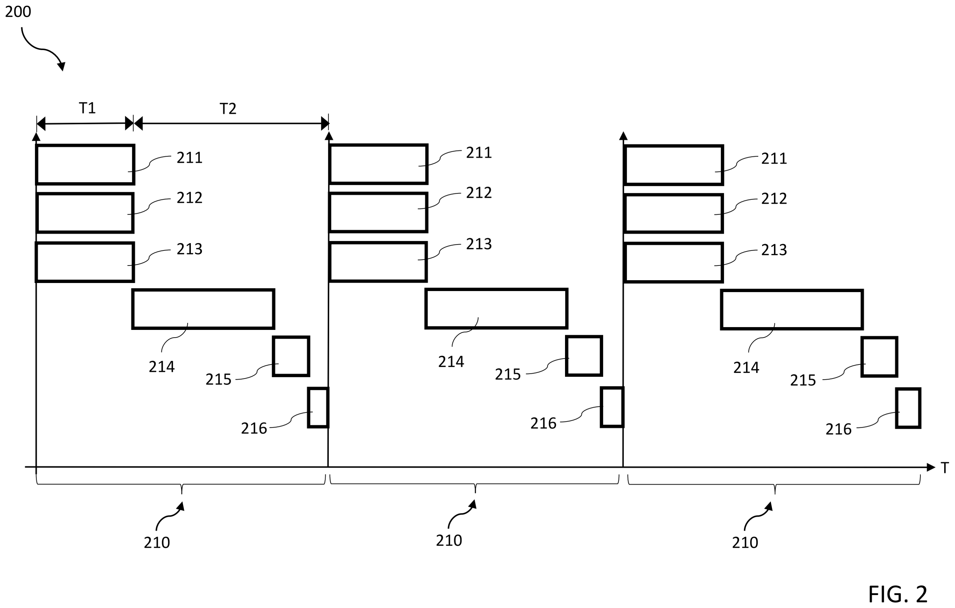

Figure 2 is an example of a timeline chart 200 illustrating a state-of-the-art radar imaging method. The chart 200 illustrates three consecutive cycles 210 of a MIMO radar imaging method. For each cycle 210, the steps of the method are illustrated by rectangles positioned on a timeline ("T").

Each cycle comprises an RF measurement time ("T1") period and an RF idle time ("T2") period, after the RF measurement time period.

During the RF measurement time period T1, a radar system is for example configured to emit a signal 211, to receive and convert the signal 212 and to perform physical channel processing 213 on the converted signal.

During the RF idle time period T2, the radar system is for example configured to perform virtual channel processing 214, object processing 215 and to output an object list 216.

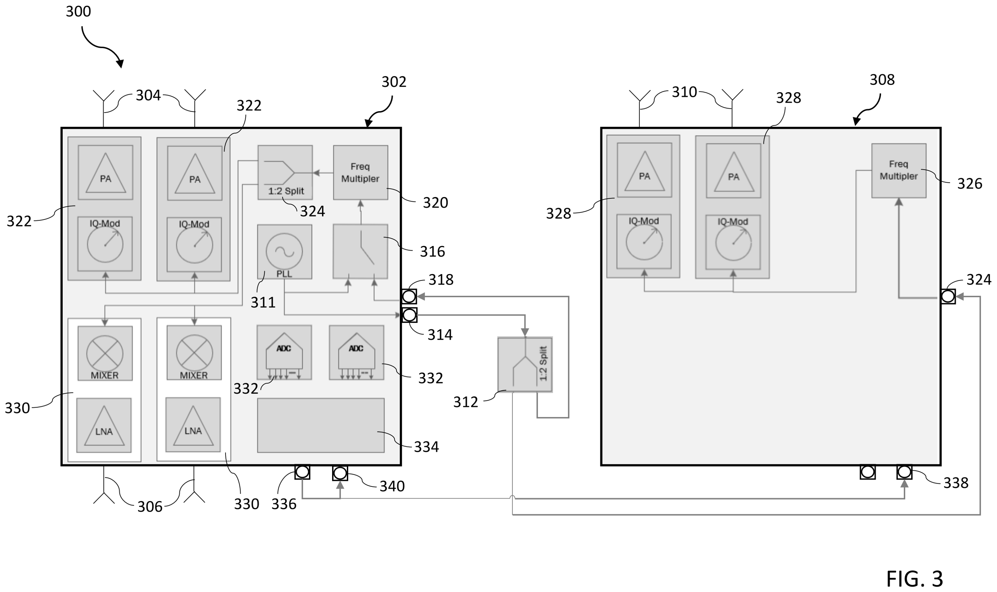

Figure 3 illustrates a radar system 300 according to one embodiment of the present disclosure.

According to one embodiment, the radar system 300 comprises:
- a first circuit 302 comprising n outputs providing n first RF transmission signals for driving a plurality of n transmit antennas 304 and m inputs for receiving m RF input signals received by a plurality of m receive antennas 306; and
- a second circuit 308 comprising j outputs providing j second RF transmission signals for driving a plurality of j transmit antennas 310, the first and second circuits receiving one or more common timing signals for synchronizing the first and second RF transmission signals;
wherein the first circuit 302 is for example configured to process the m RF input signals received from the m receive antennas 306, and to perform, for example, virtual channel processing on only (n+j).m virtual channels.

According to one embodiment, the first circuit 302 is a base RoC that is cascaded with the second circuit 308. In the example embodiment of Figure 3, the second circuit 308 is a TX extender chip. Advantageously, the TX extender chip increases the number of MIMO virtual channels of the radar system 300 without requiring a fast chip-to-chip data interface or an increase in the base RoC memory resources. In the embodiment of Figure 3, the second circuit 308 is not capable of performing digital signal processing of RF reception channels. The second circuit 308 for example comprise one or more of the j outputs connected to one or more of the plurality of j transmit antennas 310 but the second circuit 308 for example does not comprise any reception channel or circuitry configured to store or process data. Each of the first circuit 302 and the second circuit 308 is for example configured to process only data received from its own receive antennas.

The first circuit 302 for example comprises a clock-generation circuit (not illustrated in Figure 3) that is configured to generate the one or more common timing signals at a clock-signal output terminal 336. The clock-signal output terminal 336 of the first circuit 302 is for example connected to a clock-signal input terminal 338 of the second circuit 308 and is for example further connected to a clock-signal input terminal 340 of the first circuit 302. The first circuit 302 and the second circuit 308 are for example configured to use the same one or more common timing signals generated by the first circuit 302 and are for example configured to generate and emit synchronized signals.

In the example of Figure 3, the first circuit 302 comprises a local oscillator 311, for example a phase-locked loop ("PLL") oscillator. The local oscillator 311 is for example configured to generate a frequency-modulated continuous wave (FMCW) signal comprising a set of chirp modulations.

The local oscillator 311 is for example coupled to a signal splitter ("1:2 split") 312 via an output terminal 314. The signal splitter 312 is configured to receive the signal generated by the local oscillator 311 and is for example configured to duplicate the received signal. The signal splitter 312 is for example coupled to a switch 316 of the first circuit 302, for example via an input terminal 318 of the first circuit 302. The local oscillator 311 is for example further connected to the switch 316. The switch 316 is for example configured to receive the signal generated by the local oscillator 311 and directly transmitted by the local oscillator 311 and to receive the signal generated by the local oscillator 311 via the signal splitter 312.

The switch 316 is further configured to transmit one of the incoming signals, for example to a frequency multiplier 320. The frequency multiplier 320 is for example configured to multiply the frequency of a received signal by a desired factor. The frequency multiplier 320 is for example coupled to m TX physical channels 322, for example via a second signal splitter 324.

Each TX physical channel 322 for example comprises an IQ modulator ("IQ-Mod") and a power amplifier ("PA"). The IQ modulator is for example configured to modulate a signal, for example to rotate and/or configure the phase of the signal. The IQ modulator is for example configured to apply a modulation that is specific to the TX physical channel 322. Each TX physical channels 322 is coupled to, preferably connected to, one of the transmit antennas 304.

According to one embodiment, the first circuit 302 is coupled to the second circuit 308. In the example embodiment of Figure 3, the output terminal 314 of the first circuit 302 is coupled to an input terminal 324 of the second circuit 308 via the signal splitter 312.

The second circuit 308 for example comprises a frequency multiplier 326. The frequency multiplier 326 is for example coupled to the input terminal 324. The frequency multiplier 326 is for example configured to receive the signals generated by the local oscillator 311 of the first circuit 302 and is for example configured to multiply the frequency of a received signal by a desired factor. The frequency multiplier 326 is for example coupled to j TX physical channels 328.

Each TX physical channel 328 of the second circuit 308 is for example similar to the TX physical channels 322 of the first circuit 302. Each TX physical channel 328 is coupled to, preferably connected to, one of the transmit antennas 310.

The signals emitted by the m transmit antennas 304 of the first circuit 302 and the signals emitted by the j transmit antennas 310 of the second circuit 308 are synchronized thanks to the use of one or more common timing signals generated for both circuits by the local oscillator 311 of the first circuit 302.

According to one embodiment, each radar cycle comprises one or more frames. The local oscillator 311 of the first circuit 302 is for example configured to generate an FMCW signal comprising a set of chirp modulations for each frame. Each of the n and j transmission signals forms an RF transmission channel comprising a phase-modulated version, or a time-modulated version, of the FMCW signal. Each of the n and j transmission signals has for example been modulated with a TX-specific phase modulation, for example unique to the TX physical channel 322 it comes from. Phase-modulated versions are for example generated using a code-division multiple access (CDMA) method or a doppler-division multiple access (DDMA) method. Time-modulated versions are for example generated using a time-division multiple access (TDMA) method.

The first circuit 302 further comprises the m receive antennas 306, coupled to, preferably connected to, m RX physical channels 330. Each of the m RF input signals forms an RF reception channel and the m RX physical channel 330 are configured to perform analogue and digital signal processing of the m RF reception channels. Each RX physical channel 330 for example comprises a low-noise amplifier ("LNA") and a mixer ("MIXER"). Each RX physical channel 330 is for example configured to receive signals from the n TX physical channels 322 of the first circuit 302 and from the j TX physical channel 328 of the second circuit 308. Each RX physical channel 330 is further configured to perform physical channel processing on the received signals, as detailed in step 102 of Figure 1.

In particular, the mixer of the RX physical channel 330 is for example coupled to the second signal splitter 324 to receive the FMCW signal generated by the local oscillator 311. Each mixer of the m RX physical channel 330 is for example configured to mix one of the m RF input signals with the FMCW signal to obtain an intermediate frequency (IF) signal having a phase that is dependent on the antenna location of the receive antenna 306 and on the antenna locations of the n+j transmit antennas.

The first circuit 302 for example further comprises one or more analogue-to-digital converters (ADC) 332 that are coupled to the RX physical channels 330. Each RX physical channel 330 is for example further configured to sample the IF signal of each RF reception channel, by the ADCs, to generate a set of ADC samples for each chirp of a frame. Each RX physical channel 330 is for example further configured to perform a fast Fourier transform (FFT) operation on the ADC samples to produce complex range FFT data for each chirp and for each of the m RF reception channels.

Advantageously, the number of TX physical channels is increased while the number of RX physical channels remains constant. As a consequence, the number of virtual antennas or virtual channels that is obtained is tuned relatively more finely. The number of virtual antennas or virtual channels corresponds to the number of TX physical channels multiplied by the number of RX physical channels.

The first circuit 302 further comprises an electronic memory and processing circuits 334 configured to perform frame storage, virtual channel processing, optionally object processing.

According to one embodiment, the electronic memory of the first circuit 302 is configured to store a data cube based on the m RF input signals from the m receive antennas. However, the electronic memory of the first circuit 302 for example has a total memory storage capacity that is lower than a storage capacity needed to store a data cube based on more than m RF input signals. Advantageously, the electronic memory of the first circuit 302 is able to store the data received from the m RX physical channel 330, because the amount of data scales with the number of receive antennas 306, while maintaining a relatively low surface area. A data cube is for example a way to conceptually represent space-time processing. A data cube for example corresponds to a multi-dimensional array element, for example a three-dimension matrix, comprising data information. The data cube for example has a first dimension corresponding to the number m of RX physical channels 330, a second dimension corresponding to a number of chirps, or pulses, of the RF input signals and a third dimension corresponding to a number of samples per chirp, or per pulse.

The electronic memory is for example configured to store the complex range FFT data for all chirps of the frames and for each of the m RF reception channels.

The processing circuits of the first circuit 302 are for example configured to perform virtual channel processing, as detailed in step 106 of Figure 1, on the (n+j).m virtual channels. Advantageously, although the surface area of the electronic memory and the amount of data has not scaled with the increased number of transmit antennas, the number of virtual antennas scales with the total number of transmit antennas. The surface area of the processing circuits is for example relatively low compared to the surface area of the electronic memory.

According to one embodiment, the radar system 300 is configured to perform a method of radar imaging, the method comprising:
- receiving, by the first circuit 302 and by the second circuit 308 of the radar system 300, one or more common timing signals for synchronizing n first and j second RF transmission signals;
- outputting, at n outputs of the first circuit 302, the n first RF transmission signals for driving a plurality of n transmit antennas 304;
- outputting, at j outputs of the second circuit 308, the j second RF transmission signals for driving a plurality of j transmit antennas 310;
- receiving, by m inputs of the first circuit 302, m RF input signals received by a plurality of m receive antennas;
- processing, by the first circuit 302, the m RF input signals received from the m receive antennas 306; and
- performing, for example, virtual channel processing by the first circuit 302 on only (n+j).m virtual channels.

In particular, each of the m RF input signals for example forms an RF reception channel and the first circuit 302 is for example configured to perform analogue and digital signal processing of the m RF reception channels comprising:
- mixing each of the m RF input signals with the FMCW signal to obtain an intermediate frequency (IF) signal having a phase that is dependent on the antenna locations of the m receive antennas 306 and the n+j transmit antennas;
- sampling, by the one or more ADCs 332 of the first circuit 302, the IF signal of each RF reception channel to generate a set of ADC samples for each chirp of the first frame; and
- performing a FFT operation on the ADC samples to produce complex range FFT data for each chirp and for each of the m RF reception channels, wherein the data cube stored by the electronic memory of the first circuit 302 comprises the complex range FFT data for all chirps of the first frame and for each of the m RF reception channels.

In the proposed scalable MIMO RADAR, the MIMO virtual channels of a base RoC are extended by adding coherent TX physical channels to the existing ones. This is for example achieved by cascading a secondary RF chip to the base RoC through an LO distribution network to enable coherent operation.

Although in the embodiment of Figure 3 the second circuit 308 comprises a unique transmission channel extender chip, in other embodiments, the second circuit 308 comprises multiple transmission channel extender chips. Each transmission channel extender chip comprises one or more outputs coupled to one or more transmit antennas and each of the transmission channel extender chip receives the one or more common timing signals from the first circuit 302.

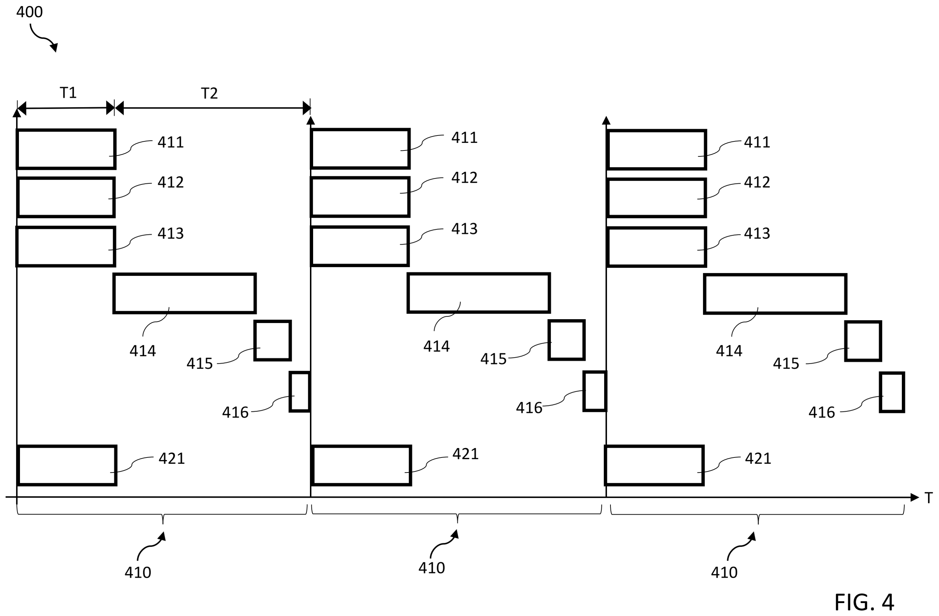

Figure 4 is a timeline chart 400 illustrating a radar imaging method of the radar system 300 of Figure 3, according to one embodiment of the present disclosure.

Some elements of Figure 4 are similar to elements of Figure 3, those elements are not detailed again.

The chart 400 illustrates three consecutive cycles 410 of a MIMO radar imaging method. For each cycle 410, the steps of the method are illustrated by rectangles positioned on a timeline ("T"). Although three cycles are illustrated, the MIMO radar imaging method may be executed for any number of cycles. Each cycle 410 comprises one or more frames and each frame comprises one or more chirp.

According to one embodiment, each cycle 410 comprises an RF measurement time ("T1") period and an RF idle time ("T2") period. The RF idle time period T2 follows, for example directly, the RF measurement time period T1. The RF measurement time period T1 is for example comprised in the range 15 ms to 25 ms. The RF idle time period T2 is for example comprised in the range 25 ms to 35 ms.

In a step 411 during the RF measurement time period T1, the first circuit 302 of the radar system 300 is for example configured to generate, at the n outputs of the first circuit 302, the n RF transmission signals for driving the n transmit antennas 304.

In a step 421 during the RF measurement time period T1, the second circuit 308 of the radar system 300 is for example configured to generate, at the j outputs of the second circuit 308, the j RF transmission signals for driving the j transmit antennas 310.

In a step 412 during the RF measurement time period T1, the first circuit 302 of the radar system 300 is for example further configured to receive, by the m inputs of the first circuit 302, m RF input signals received by a plurality of m receive antennas 306 and for example to convert the m RF input signals from analogue signals into digital signals. Each RX physical channel 330 is for example configured to sample the signal of each RF reception channel, by the ADCs, to generate a set of ADC samples for each chirp of a frame. The m RF input signals are for example coming from the n transmit antennas 304 and from the j transmit antennas 310.

In a step 413 during the RF measurement time period T1, the first circuit 302 of the radar system 300 is for example further configured to perform physical channel processing, as detailed in step 102 of Figure 1 and in Figure 3. Each RX physical channel 330 is for example configured to perform an FFT operation on the ADC samples to produce complex range FFT data for each chirp and for each of the m RF reception channels.

The steps 411 to 413 and the step 421 are for example performed simultaneously or in parallel and are for example performed for the one or more frames of the cycle 410.

In a step 414 during the RF idle time period T2, the first circuit 302 of the radar system 300 is for example configured to perform virtual channel processing, as detailed in step 106 of Figure 1 and in Figure 3. Virtual channel processing is for example performed on the signals from the m receive antennas 306 and is for example performed for (n+j).m virtual channels.

In a step 415 during the RF idle time period T2, the first circuit 302 of the radar system 300 is for example further configured to perform object processing, as detailed in step 108 of Figure 1. The step 415 is for example performed after the end of step 414.

In a step 416 during the RF idle time period T2, the first circuit 302 of the radar system 300 is for example further configured to output data, for example in the form of a point cloud or of an object list. The step 416 is for example performed after the end of step 415.

According to one embodiment, the RF measurement time period T1 of a cycle 410 starts after the end of the RF idle time period T2 of the previous cycle 410.

According to one embodiment, the steps 411 to 416 and the step 421 are performed periodically by the radar system 300.

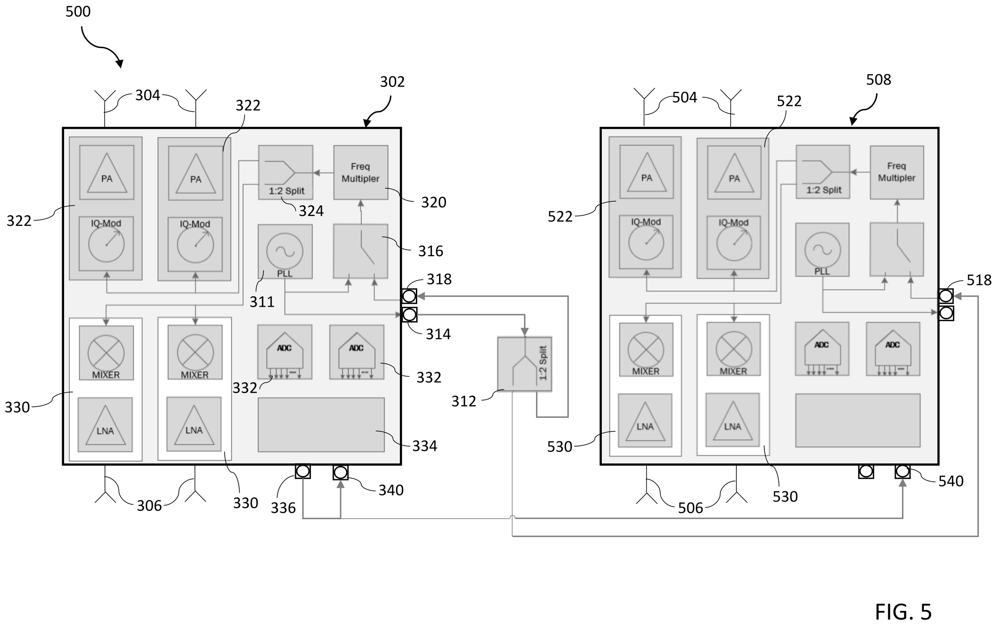

Figure 5 illustrates a radar system 500 according to an embodiment of the present disclosure. Some elements of the radar system 500 are similar to elements of the radar system 300 of Figure 3. Those elements are referenced with the same references and are not detailed again.

According to one embodiment, the radar system 500 comprises:
- the first circuit 302 comprising n outputs providing n first RF transmission signals for driving a plurality of n transmit antennas 304 and m inputs for receiving m RF input signals received by the plurality of m receive antennas 306; and
- a second circuit 508 comprising j outputs providing j second RF transmission signals for driving a plurality of j transmit antennas 504, the first and second circuits receiving one or more common timing signals for synchronizing the first and second RF transmission signals; and
- the second circuit 508 further comprising k inputs for receiving k RF input signals received by a plurality of k receive antennas 506.

According to one embodiment, the first circuit 302 is configured to process the m RF input signals received from the m receive antennas 306, and to perform, for example, virtual channel processing on only (n+j).m virtual channels. In particular, the first circuit 302 is not configured to receive the k RF input signals from the second circuit 508 and is not configured to perform digital signal processing based on the k RF input signals.

According to one embodiment, the radar system 500 comprises the first circuit 302, which is for example a base RoC, that is cascaded with the second circuit 508. In the example embodiment of Figure 5, the second circuit 508 is a base RoC similar to the first circuit 302. A difference between the first circuit 302 and the second circuit 508 is that the second circuit 508 comprises j TX physical channels 522 coupled to, preferably connected to, the j transmit antennas 504 and further comprises k RX physical channels 530 coupled to, preferably connected to, the k receive antennas 506. According to one embodiment, the second circuit 508 is configured to process the k RF input signals received from the k receive antennas 506, and to perform, for example, virtual channel processing on only (n+j).k virtual channels. In particular, the second circuit 508 is not configured to receive the m RF input signals from the first circuit 302 and is not configured to perform digital signal processing based on the m RF input signals.

The first and second circuits are for example each a RoC comprising data storage and processing capabilities.

According to one embodiment, the first circuit 302 comprises a clock-generation circuit (not illustrated in Figure 5) that is configured to generate the one or more common timing signals at a clock-signal output terminal 336. The clock-signal output terminal 336 of the first circuit 302 is for example connected to a clock-signal input terminal 540 of the second circuit 508 and is for example further connected to a clock-signal input terminal 340 of the first circuit 302. The first circuit 302 and the second circuit 508 are for example configured to use the same one or more common timing signals generated by the first circuit 302.

According to one embodiment, the first circuit 302 is coupled to the second circuit 508. The first circuit 302 is for example configured to transmit signals generated by the local oscillator 311 of the first circuit 302 to the second circuit 508. In the example embodiment of Figure 5, the output terminal 314 of the first circuit 302 is coupled to an input terminal 518 of the second circuit 508 via the signal splitter 312.

According to one embodiment, the electronic memory of the first circuit 302 is configured to store a first data cube based on the m RF input signals from the m receive antennas 306. However, the electronic memory of the first circuit 302 for example has a total memory storage capacity that is lower than a storage capacity needed to store both the first data cube and a second data cube based on the k RF input signals from the k receive antennas 506.

According to one embodiment, the second circuit 508 has an electronic memory that is configured to store a first data cube based on the k RF input signals from the k receive antennas 506. However, the electronic memory of the second circuit 508 for example has a total memory storage capacity that is lower than a storage capacity needed to store both the first data cube and a second data cube based on the m RF input signals from the m receive antennas 306.

Although in the embodiment of Figure 5 the first and the second circuit each comprises a unique RoC, in other embodiments, the first circuit 302 is an RoC and the second circuit 308 comprises multiple RoCs. For example, each RoC of the second circuit 508:
- comprises one or more outputs coupled to one or more transmit antennas;
- is configured to receive the one or more common timing signals from the first circuit 302; and
- comprises data storage and processing capabilities.

In the embodiment of Figure 5, a primary RoC is cascaded with a secondary RoC and each device for example uses the TX channels of the other device to extend its MIMO virtual channels, without requiring a fast chip-to-chip data interface or an increase of RoC memory resources.

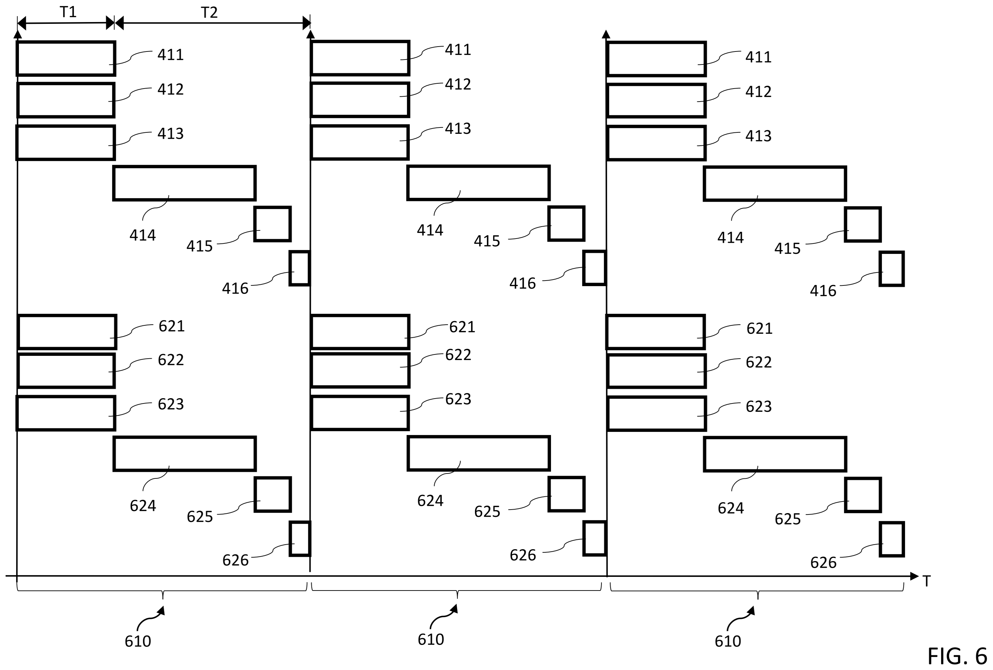

Figure 6 is a timeline chart 600 illustrating a radar imaging method 605 of the radar system 500 of Figure 5, according to one embodiment of the present disclosure.

The chart 600 illustrates three consecutive cycles 610 of the MIMO radar imaging method 605. For each cycle 610, the steps of the method are illustrated by rectangles positioned on a timeline ("T"). Although three cycles are illustrated, the MIMO radar imaging method 605 may be executed for any number of cycles. Each cycle 610 comprises one or more frames and each frame comprises one or more chirp.

Some elements of Figure 6 are similar to elements of Figure 4. Those elements are referenced with the same references and are not detailed again. In particular, each cycle 610 for example comprises the steps 411 to 416 as detailed in Figure 4.

In a step 621 during the RF measurement time period T1, the second circuit 508 of the radar system 500 is for example configured to output, at the j outputs of the second circuit 508, the j RF transmission signals for driving the j transmit antennas 504.

In a step 622 during the RF measurement time period T1, the second circuit 508 of the radar system 500 is for example further configured to receive, by the k inputs of the second circuit 508, k RF input signals received by a plurality of k receive antennas 506 and for example to convert the k RF input signals from analogue signals to digital signals. Each RX physical channel 530 is for example configured to sample the signal of each RF reception channel, by the ADCs, to generate a set of ADC samples for each chirp of a frame. The k RF input signals are for example coming from the n transmit antennas 304 of the first circuit 302 and from the j transmit antennas 504 of the second circuit 508.

In a step 623 during the RF measurement time period T1, the second circuit 508 of the radar system 500 is for example further configured to perform physical channel processing, as detailed in step 102 of Figure 1 and in Figure 3. Each RX physical channel 530 is for example configured to perform an FFT operation on the ADC samples to produce complex range FFT data for each chirp and for each of the k RF reception channels.

The steps 411 to 413 and the steps 621 to 623 are for example performed simultaneously or in parallel and are for example performed for the one or more frames of the cycle 710.

In a step 624 during the RF idle time period T2, the second circuit 508 of the radar system 500 is for example configured to perform virtual channel processing, as detailed in step 106 of Figure 1 and in Figure 3. Virtual channel processing is for example performed on the signals from the k receive antennas 506 and is for example performed for (n+j).k virtual channels. In particular, the second circuit 508 is not configured to receive the m RF input signals from the first circuit 302 and is not configured to perform digital signal processing based on the m RF input signals.

In a step 625 during the RF idle time period T2, the second circuit 508 of the radar system 500 is for example further configured to perform object processing, as detailed in step 108 of Figure 1, based on the k RF input signals. The step 625 is for example performed after the end of step 624.

In a step 626 during the RF idle time period T2, the second circuit 508 of the radar system 500 is for example further configured to output data, for example in the form of a point cloud or of an object list. The step 626 is for example performed after the end of step 625.

According to one embodiment, the steps 411 to 416 and the steps 621 to 626 are performed periodically by the radar system 500.

According to one embodiment, the first circuit 302 and the second circuit 508 transmit and receive the respective RF signals at the same time and process the respective RX data to produce two synchronous RADAR views at their outputs. Advantageously, each circuit provides a different RADAR view of a scene, which increases the total amount of information.

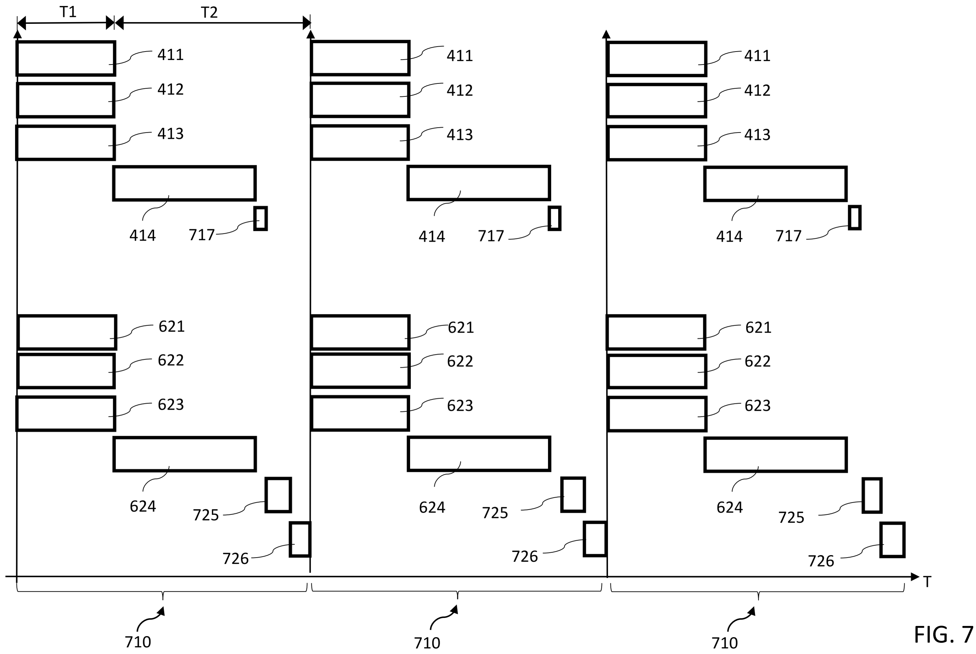

Figure 7 is a timeline chart 700 illustrating a radar imaging method 705 of the radar system 500 of Figure 5, according to another embodiment of the present disclosure.

The chart 700 illustrates three consecutive cycles 710 of a MIMO radar imaging method. For each cycle 710, the steps of the method are illustrated by rectangles positioned on a timeline ("T"). Although three cycles are illustrated, the MIMO radar imaging method may be executed for any number of cycles. Each cycle 710 comprises one or more frames and each frame comprises one or more chirp.

Some elements of Figure 7 are similar to elements of Figure 4 or Figure 6. Those elements are referenced with the same references and are not detailed again. In particular, each cycle 710 for example comprises the steps 411 to 414 as detailed in Figure 4 as well as the steps 621 to 624 as detailed in Figure 6.

In the embodiment of Figure 7, in a step 717 during the RF idle time period T2, the first circuit 302 of the radar system 500 is for example configured to transfer the output of the virtual channel processing step, performed by the first circuit 302 in step 414, to the second circuit 508. The step 717 is for example executed after the end of step 414.

In a step 725 during the RF idle time period T2, the second circuit 508 of the radar system 500 is for example further configured to perform object processing, as detailed in step 108 of Figure 1, based on the k RF input signals received by the k receive antennas 506 of the second circuit 508 and based on the m RF input signals received by the m receive antennas 306 of the first circuit 302. The step 725 is for example performed after the end of step 624 and after step 717.

In a step 726 during the RF idle time period T2, the second circuit 508 of the radar system 500 is for example further configured to output data, for example in the form of a point cloud or of an object list. The step 726 is for example performed after the end of step 725.

According to one embodiment, the steps 411 to 414 and 417 and the steps 621 to 624, 725 and 726 are performed periodically by the radar system 500.

According to one embodiment, the first circuit 302 and the second circuit 508 each transmit and receive the respective RF signals at the same time and process the respective RX data. The first circuit 302 transfers data obtained by the virtual processing step to the second circuit 508 which finally synthesizes a unified RADAR view at its output.

Advantageously, the object processing step is performed using data from the k RF input signals received by the k receive antennas 506 of the second circuit 508 and based on the m RF input signals received by the m receive antennas 306 of the first circuit 302 without requiring a fast chip-to-chip data interface or an increase of RoC memory resources.

Although, in the timeline chart 700, the first circuit 302 transfers data to the second circuit 508 and it is the second circuit 508 that performs object processing on data from both circuits, in an alternative embodiment the second circuit 508 transfers data to the first circuit 302 and it is the first circuit 302 that performs object processing on data from both circuits.

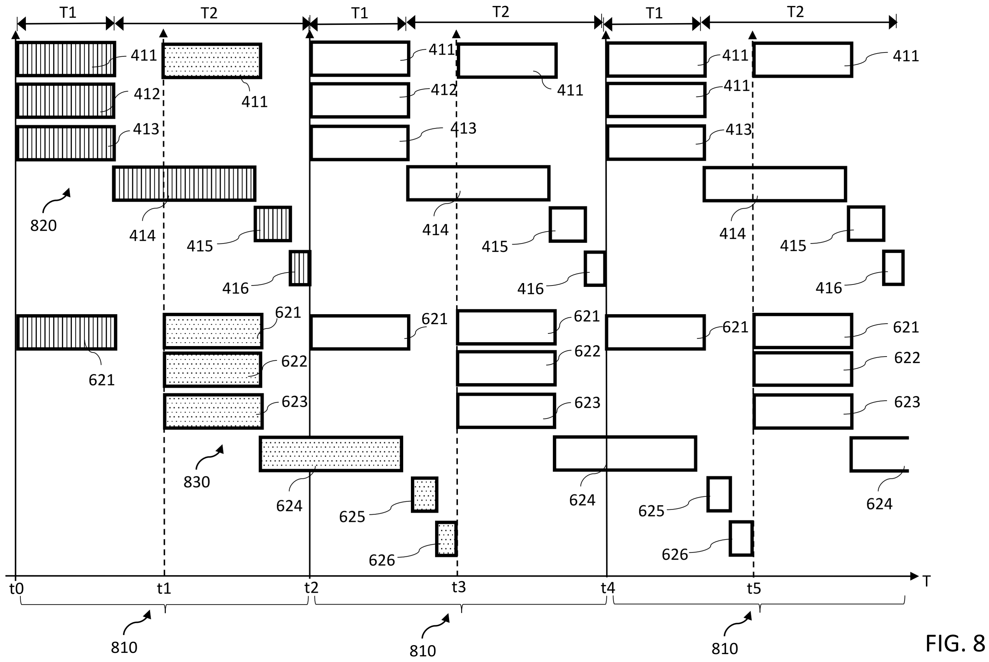

Figure 8 is a timeline chart 800 illustrating a radar imaging method 805 of the radar system 500 of Figure 5, according to another embodiment of the present disclosure.

The chart 800 illustrates three consecutive cycles 810 of the MIMO radar imaging method 805 executed by the radar system 500. For each cycle 810, the steps of the method are illustrated by rectangles positioned on a timeline ("T"). Although three cycles 810 are illustrated, the MIMO radar imaging method 805 may be executed for any number of cycles. Each cycle 810 comprises one or more frames and each frame comprises one or more chirp.

Some elements of Figure 8 are similar to elements of Figure 4 or Figure 6. Those elements are referenced with the same references and are not detailed again. The differences between the MIMO radar imaging method 805 illustrated in Figure 8 and the MIMO radar imaging method 605 illustrated in Figure 6 are that:
- the steps 411 and 621 are executed twice more often in the MIMO radar imaging method 805; and
- the steps 621 to 626, executed by the second circuit 508, are performed with a delay with respect to the steps 411 to 416, executed by the first circuit 302.

According to one embodiment, the step 411 and the step 621 are each executed twice per cycle 810. For example, the step 411 and the step 621 are executed at the same time, by the first circuit 302 and by the second circuit 508 respectively. The step 411 and the step 621 are for example executed at successive times t0, t1, t2, t3, t4 and t5 in the example of Figure 8.

In the example of Figure 8, the first circuit 302 executes the steps 411 to 416, as detailed in relation with Figure 4, during the first cycle, between the time t0 and the time t2, for example starting from the time t0. In parallel, the second circuit 508 is configured to execute step 621 during the RF measurement time period T1 of the first cycle, for example starting from the time t0. The step 414 is performed based on signals coming from the n transmit antennas 304 and from the j transmit antennas 310. These steps 820 (stripped on Figure 8) are for example executed periodically by the first and second circuits, for example during each cycle 810 of the MIMO radar imaging method 805. For example, the first circuit 302 repeats the steps 411 to 416 during the second cycle, between the time t2 and the time t4, for example starting from the time t2. In parallel, the second circuit 508 is configured to execute step 621 during the RF measurement time period T1 of the second cycle, for example starting from the time t2.

In the example of Figure 8, the second circuit 508 further executes the steps 621 to 626, as detailed in relation with Figure 6, between the time t1 and the time t3, for example starting from the time t1. The time t1 is between time t0 and time t2 and is included in the first cycle. In particular, the steps 621 to 623 are for example performed during the RF idle time period T2 of the first cycle. In parallel, the first circuit 302 is configured to execute step 411 during the RF idle time period T2 of the first cycle, for example starting from the time t1. The step 624 is performed based on signals coming from the n transmit antennas 304 and from the j transmit antennas 310. These steps 830 (dotted in Figure 8) are for example executed periodically by the first and second circuits, for example during each cycle 810 of the MIMO radar imaging method 805. For example, the second circuit 508 repeats the steps 621 to 626, between the time t3 and the time t5, for example starting from the time t3. The time t3 is between time t2 and time t4 and is included in the second cycle. The time t5 is after time t4 and is included in the third cycle. In parallel, the first circuit 302 is configured to execute step 411 during the RF idle time period T2 of the second cycle, for example starting from the time t3.

According to one embodiment, the first circuit 302 and the second circuit 508 transmit and receive the respective RF signals at interleaved times and process the respective RX data to produce two interleaved RADAR views at their outputs, for example point clouds or object lists.

Advantageously, when the radar system 500 performs the radar imaging method 805 of Figure 8, its emission frequency is twice higher with respect to the radar imaging methods 405, 605 and 705 and its object processing or output frequency is twice higher as well while storing the same amount of data and the same processing capacity per circuit with respect to the radar imaging methods 605 and 705.

Each circuit produces a RADAR view that is for example different and that contributes to an increase of information.

Various embodiments and variants have been described to allow for a truly scalable RADAR system.

One aim of the embodiments described herein is to allow for a scalable edge-RADAR system. This allows the number of transmitter channels to be extended by means of an extender integrated circuit (IC) while keeping the numbers of receiver channels the same (or increasing both receiver channels and transmitter channels by instantiating the same main IC twice) .

Allowing to scale the number of channels without changing the RADAR algorithms and not affecting the size of the memory allows supporting different type of applications by system composition.

In the various embodiments described above, the increased number of MIMO virtual channels results in an improvement of target detection SNR and angular resolution over the single-chip solution. The extension of MIMO virtual channels does not require a corresponding increase of RoC memory resources or a high-speed data interface between the devices.

In the embodiments described above where a secondary RF chip is cascaded to a base RoC, the extended RADAR system combines two different RADAR views of the scene, each view benefitting from the above indicated target detection SNR and angular resolution improvements. Since the two RADAR views are captured by different RX antenna arrays, the extended RADAR system benefits from an increased spatial diversity (e.g. in terms of resiliency to fading or multi-path ambiguity) and possible FOV complementarity (e.g. wide-angle vs narrow-angle). An extended RADAR system based on the interleaved processing mode can provide an increased update rate, which can improve object tracking responsivity and accuracy.

Embodiments of the present disclosure for example correspond to a RADAR or an advanced driver-assistance systems (ADAS) .

Various embodiments and variants have been described. Those skilled in the art will understand that certain features of these embodiments can be combined and other variants will readily occur to those skilled in the art. In particular, in the embodiments detailed in relation with Figure 3 and Figure 4, the second circuit 308 comprises a TX extender integrated circuit chip and in the embodiments detailed in relation with Figure 5 to Figure 8, the second circuit 508 comprises a RoC. In other embodiments, the second circuit comprises at least one TX extender integrated circuit chip and at least one RoC.

Finally, the practical implementation of the embodiments and variants described herein is within the capabilities of those skilled in the art based on the functional description provided hereinabove.

In particular, the following paragraphs summarize particular example embodiments of the invention.

Example 1: A radar system comprising:
- a first circuit comprising n outputs providing n first radio frequency (RF) transmission signals for driving a plurality of n transmit antennas and m inputs for receiving m RF input signals received by a plurality of m receive antennas;
- a second circuit comprising j outputs providing j second RF transmission signals for driving a plurality of j transmit antennas, the first and second circuits receiving one or more common timing signals for synchronizing the first and second RF transmission signals;
wherein the first circuit is configured to process the m RF input signals received from the m receive antennas, and to perform, for example, virtual channel processing on only (n+j).m virtual channels.

Example 2: The radar system of example 1, wherein the first circuit comprises a first memory configured to store a first data cube based on the m RF input signals from the m receive antennas, wherein a total memory storage capacity of the first memory is lower than a storage capacity needed to store a data cube based on more than m RF input signals.

Example 3: The radar system of example 2, wherein:
- the first or second circuit comprises a local oscillator (LO) configured to generate a frequency-modulated continuous wave (FMCW) signal comprising a set of chirp modulations for a first frame generated in a first radar cycle; and
- each of the n and j transmission signals forms an RF transmission channel comprising a phase-modulated version of the FMCW signal.

Example 4: The radar system of example 3, wherein each of the m RF input signals forms an RF reception channel and the first circuit is configured to perform analog and digital signal processing of the m RF reception channels comprising:
- mixing each of the m RF input signals with the FMCW signal to obtain an intermediate frequency (IF) signal having a phase that is dependent on the antenna locations of the m receive antennas and the n+j transmit antennas;
- sampling, by one or more analog to digital converters (ADC) of the first circuit, the IF signal of each RF reception channel to generate a set of ADC samples for each chirp of the first frame; and
- performing a fast Fourier transform (FFT) operation on the ADC samples to produce complex range FFT data for each chirp and for each of the m RF reception channels, wherein the first data cube stored by the first memory comprises the complex range FFT data for all chirps of the first frame and for each of the m RF reception channels.

Example 5: The radar system of example 3 or 4, wherein the second circuit is a transmission channel extender chip that is not capable of performing digital signal processing of RF reception channels.

Example 6: The radar system of example 3 or 4, wherein the second circuit comprises a plurality of transmission channel extender chips, each comprising one or more of the j outputs coupled to one or more of the j transmit antennas, each of the transmission channel extender chips receiving the one or more common timing signals.

Example 7: The radar system of example 3 or 4, wherein the second circuit further comprises k inputs for receiving k RF input signals received by a plurality of k receive antennas, and wherein the first circuit is not configured to receive the k RF input signals and is not configured to perform digital signal processing based on the k RF input signals.

Example 8: The radar system of example 7, wherein a total memory storage capacity of the first circuit is lower than a storage capacity needed to store both the first data cube and a second data cube based on the k RF input signals from the k receive antennas.

Example 9: The radar system of example 7 or 8, wherein the first and second circuits are each a radar-on-chip (RoC) comprising data storage and processing capabilities.

Example 10: The radar system of example 7 or 8, wherein the first circuit is a radar-on-chip (RoC), and the second circuit comprises a plurality of radar-on-chips (RoC) each comprising one or more of the j outputs coupled to one or more of the j transmit antennas, each radar-on-chip of the second circuit receiving the one or more common timing signals and comprising data storage and processing capabilities.

Example 11: The radar system of any of examples 7 to 10, wherein the second circuit comprises a second memory configured to store a second data cube based on the k RF input signals from the k receive antennas, wherein a total memory storage capacity of the second memory is lower than a storage capacity needed to store a data cube based on more than k RF input signals, and wherein a total memory storage capacity of the second circuit is lower than a storage capacity needed to store both the first and second data cubes.

Example 12: The radar system of example 11, wherein the local oscillator (LO) is configured to generate an FMCW signal comprising a set of chirp modulations for a second frame generated in a second radar cycle and wherein each of the k RF input signals forms an RF reception channel and the second circuit is configured to perform analog and digital signal processing of the k RF reception channels comprising:
- mixing each of the k RF input signals with the FMCW signal of the first or second frame to obtain an intermediate frequency (IF) signal having a phase that is dependent on the antenna locations of the k receive antennas and the n+j transmit antennas;
- sampling, by one or more analog to digital converters (ADC) of the second circuit, the IF signal of each RF reception channel to generate a set of ADC samples for each chirp of the first or second frame; and
- performing an FFT operation on the ADC samples to produce complex range FFT data for each chirp and for each of the k RF reception channels, wherein the second data cube stored by the second memory comprises the complex range FFT data for all chirps of the first or second frame and for each of the k RF reception channels.

Example 13: A method of radar imaging by a radar system, the method comprising:
- receiving, by first and second circuits of the radar system, one or more common timing signals for synchronizing n first and j second RF transmission signals;
- outputting, at n outputs of the first circuit, the n first RF transmission signals for driving a plurality of n transmit antennas;
- receiving, by m inputs of the first circuit, m RF input signals received by a plurality of m receive antennas;
- outputting, at j outputs of the second circuit, the j second RF transmission signals for driving a plurality of j transmit antennas;
- processing, by the first circuit, the m RF input signals received from the m receive antennas; and
- performing, for example, virtual channel processing by the first circuit on only (n+j).m virtual channels.

Example 14: The method of example 13, further comprising storing in a first memory of the first circuit a first data cube based on the m RF input signals from the m receive antennas, wherein a total memory storage capacity of the first memory is lower than a storage capacity needed to store a data cube based on more than m RF input signals.

Example 15: The method of example 14, further comprising generating, by a local oscillator (LO) of the first or second circuit, a frequency-modulated continuous wave (FMCW) signal comprising a set of chirp modulations for a first frame generated in a first radar cycle, wherein each of the n first and j second transmission signals forms an RF transmission channel comprising a phase-modulated version of the FMCW signal.

Example 16: The method of example 15, wherein each of the m RF input signals forms an RF reception channel, the method further comprising performing by the first circuit analog and digital signal processing of the m RF reception channels comprising:
- mixing each of the m RF input signals with the FMCW signal to obtain an intermediate frequency (IF) signal having a phase that is dependent on the antenna locations of the m receive antennas and the n+j transmit antennas;
- sampling, by one or more analog to digital converters (ADC) of the first circuit, the IF signal of each RF reception channel to generate a set of ADC samples for each chirp of the first frame; and
- performing a fast Fourier transform (FFT) operation on the ADC samples to produce complex range FFT data for each chirp and for each of the m RF reception channels, wherein the first data cube stored by the first memory comprises the complex range FFT data for all chirps of the first frame and for each of the m RF reception channels.

Example 17: The method of example 15 or 16, wherein the second circuit further comprises k inputs for receiving k RF input signals received by a plurality of k receive antennas, and wherein the first circuit is not configured to receive the k RF input signals and is not configured to perform analog or digital signal processing based on the k RF input signals, the method further comprising:
- storing, by a second memory of the second circuit, a second data cube based on the k RF input signals from the k receive antennas, wherein a total memory storage capacity of the second memory is lower than a storage capacity needed to store a data cube based on more than k RF input signals.

Example 18: The method of example 17, wherein each of the k RF input signals forms an RF reception channel and the method further comprises generating, by the local oscillator (LO), an FMCW signal comprising a set of chirp modulations for a second frame generated in a second radar cycle and performing, by the second circuit, analog and digital signal processing of the k RF reception channels comprising:
- mixing each of the k RF input signals with the FMCW signal of the first or second frame to obtain an intermediate frequency (IF) signal having a phase that is dependent on the antenna locations of the k receive antennas and the n+j transmit antennas;
- sampling, by one or more analog to digital converters (ADC) of the second circuit, the IF signal of each RF reception channel to generate a set of ADC samples for each chirp of the first or second frame; and
- performing an FFT operation on the ADC samples to produce complex range FFT data for each chirp and for each of the k RF reception channels, wherein the second data cube stored by the second memory comprises the complex range FFT data for all chirps of the first or second frame and for each of the k RF reception channels.

Example 19: The method of any of examples 13 to 18, wherein the second circuit is a transmission channel extender chip that is not capable of performing digital signal processing of RF reception channels.

Example 20: The method of any of examples 13 to 18, wherein the second circuit comprises a plurality of transmission channel extender chips, each comprising one or more of the j outputs coupled to one or more of the j transmit antennas, each of the transmission channel extender chips receiving the one or more common timing signals.

Example 21: The method of any of examples 13 to 18, wherein the first and second circuits are each a radar-on-chip (RoC) comprising data storage and processing capabilities.

Example 22: The method of any of examples 13 to 18, wherein the first circuit is a radar-on-chip (RoC), and the second circuit comprises a plurality of radar-on-chips (RoC) each comprising one or more of the j outputs coupled to one or more of the j transmit antennas, each radar-on-chip of the second circuit receiving the one or more common timing signals and comprising data storage and processing capabilities.

## Claims

1. A radar system (300, 500) comprising:
- a first circuit (302) comprising n outputs providing n first radio frequency, RF, transmission signals for driving a plurality of n transmit antennas (304) and m inputs for receiving m RF input signals received by a plurality of m receive antennas (306); and
- a second circuit (308, 508) comprising j outputs providing j second RF transmission signals for driving a plurality of j transmit antennas (310, 504), the first and second circuits receiving one or more common timing signals for synchronizing the first and second RF transmission signals;
wherein the first circuit (302) is configured to process the m RF input signals received from the m receive antennas (306), and to perform virtual channel processing on only (n+j).m virtual channels.

2. The radar system of claim 1, wherein the first circuit (302) comprises a first memory configured to store a first data cube based on the m RF input signals from the m receive antennas (306), wherein a total memory storage capacity of the first memory is lower than a storage capacity needed to store a data cube based on more than m RF input signals.

3. The radar system of claim 2, wherein:
- the first or second circuit comprises a local oscillator (311), LO, configured to generate a frequency-modulated continuous wave, FMCW, signal comprising a set of chirp modulations for a first frame generated in a first radar cycle; and
- each of the n and j transmission signals forms an RF transmission channel comprising a phase-modulated, or a time-modulated, version of the FMCW signal.

4. The radar system of claim 3, wherein each of the m RF input signals forms an RF reception channel and the first circuit is configured to perform analog and digital signal processing of the m RF reception channels comprising:
- mixing each of the m RF input signals with the FMCW signal to obtain an intermediate frequency, IF, signal having a phase that is dependent on the antenna locations of the m receive antennas (306) and the n+j transmit antennas (304, 310, 504);
- sampling, by one or more analog to digital converters, ADC, of the first circuit (302), the IF signal of each RF reception channel to generate a set of ADC samples for each chirp of the first frame; and
- performing a fast Fourier transform, FFT, operation on the ADC samples to produce complex range FFT data for each chirp and for each of the m RF reception channels, wherein the first data cube stored by the first memory comprises the complex range FFT data for all chirps of the first frame and for each of the m RF reception channels.

5. The radar system of claim 3 or 4, wherein the second circuit (308, 508) is a transmission channel extender chip that is not capable of performing digital signal processing of RF reception channels.

6. The radar system of claim 3 or 4, wherein the second circuit (308, 508) comprises a plurality of transmission channel extender chips, each comprising one or more of the j outputs coupled to one or more of the j transmit antennas (310, 504), each of the transmission channel extender chips receiving the one or more common timing signals.

7. The radar system of claim 3 or 4, wherein the second circuit (308, 508) further comprises k inputs for receiving k RF input signals received by a plurality of k receive antennas (506) .

8. The radar system of claim 7, wherein the first circuit (302) is not configured to receive the k RF input signals and is not configured to perform digital signal processing based on the k RF input signals.

9. The radar system of claim 7 or 8, wherein the first circuit is configured to receive, store and process only the m RF input signals received by the plurality of m receive antennas (306).

10. The radar system of any of claims 7 to 9, wherein a total memory storage capacity of the first circuit (302) is lower than a storage capacity needed to store both the first data cube and a second data cube based on the k RF input signals from the k receive antennas (506).

11. The radar system of any of claims 7 to 10, wherein the second circuit (308, 508) is configured to process the k RF input signals received from the k receive antennas (506), and to perform virtual channel processing on only (n+j).k virtual channels.

12. A method of radar imaging by a radar system (300, 500), the method comprising:
- receiving, by first (302) and second (308, 508) circuits of the radar system, one or more common timing signals for synchronizing n first and j second RF transmission signals;
- outputting, at n outputs of the first circuit (302), the n first RF transmission signals for driving a plurality of n transmit antennas (304);
- receiving, by m inputs of the first circuit (302), m RF input signals received by a plurality of m receive antennas (306);
- outputting, at j outputs of the second circuit (308, 508), the j second RF transmission signals for driving a plurality of j transmit antennas (310, 504);
- processing, by the first circuit, the m RF input signals received from the m receive antennas (306); and
- performing, for example, virtual channel processing by the first circuit (302) on only (n+j).m virtual channels.

13. The method of claim 12, further comprising storing in a first memory of the first circuit (302) a first data cube based on the m RF input signals from the m receive antennas (306), wherein a total memory storage capacity of the first memory is lower than a storage capacity needed to store a data cube based on more than m RF input signals.
